# EUROPÄISCHE PATENTANMELDUNG

(11) **EP 3 771 366 A1**
(43) Veröffentlichungstag der Anmeldung: **03.02.2021**
(21) Anmeldenummer: 20183474.4
(22) Anmeldetag: 01.07.2020
(51) Int. Cl.: A47J 27/00, A47J 36/02

(54) **TOPFBODENHEIZUNGSANORDNUNG FÜR EINE KÜCHENMASCHINE**

(30) Priorität: 30.07.2019 DE 102019211313
(71) Anmelder: BSH Hausgeräte GmbH, 81739 München (DE)
(72) Erfinder: Rudez, Darko, 3230 Sentjur, Slowenien (SI); Cresnar, Mihael, 3205 Vitanje (SI); Golob, Jakob, 3330 Mozirje (SI); Zilnik, Marko, 1218 Komenda (SI)

(57) **Zusammenfassung**

Die Erfindung betrifft der Topfmantel (3) zwischen dem Topf (1) und dem Topfsockel (4) angeordnet und mit dem Topfboden (2) oder oberhalb des Topfbodens (2) mit der Topfaußenwand (6) und dem Topfsockel (4) dergestalt verbunden ist, dass eine luftdichte Kammer (5) zwischen dem Topfboden (2) und dem Topfsockel (4) entsteht. Erfindungsgemäß ist vorgesehen, dass der Topfmantel (3) zwischen dem Topf (1) und dem Topfsockel (4) angeordnet und mit dem Topfboden (2) oder oberhalb des Topfbodens (2) mit der Topfaußenwand (6) und dem Topfsockel (4) dergestalt verbunden ist, dass eine luftdichte Kammer (5) zwischen dem Topfboden (2) und dem Topfsockel (4) entsteht. Die Erfindung erhöht die Wärmeleitung in Richtung des Topfes und des darin befindlichen Gargutes und verringert die Wärmeleitung in Richtung des Topfsockels verringert. Dadurch, dass der Topfboden in der luftdichten Kammer eingeschlossen ist, werden Wärmeverluste zur Umgebung minimiert und damit die Effizienz des Heizsystems noch weiter erhöht.

## Beschreibung

### Gebiet der Erfindung

Die Erfindung betrifft Topfbodenheizungsanordnung für eine Küchenmaschine aufweisend einen Topf, mit einem Topfboden in dem ein Heizelement integriert ist einem Topfmantel und einem Topfsockel wobei der Topfboden und der Topfsockel voneinander beabstandet angeordnet sind.

### Hintergrund der Erfindung

Beim Betrieb von Küchenmaschinen die neben zerkleinern, wiegen und rühren auch eine Koch- oder Bratfunktion besitzen, ist es bekannt, Töpfe zu verwenden, in denen die Heizelemente in den Topf integriert sind.

Üblicherweise befinden sich diese Heizelemente in einem Zwischenraum zwischen zwei Bodenplatten des Topfes. Durch die ausgesetzte Anordnung der Heizkammer gegenüber der Umgebung kommt es zu einem Wärmeverlust, der die Effizienz dieses Heizsystems verringert.

Die notwendigen elektrischen Anschlussaggregate und gegebenenfalls weitere mechanische Elemente befinden sich üblicherweise unterhalb des Topfbodens beziehungsweise im Topfsockel.

Oftmals ist der Topf durch ein Schraubsystem zwischen den Heizelementen und dem Topfsockel verbunden, zusätzlich findet die Wärmeabgabe von der Heizkammer aufgrund des Temperaturgradienten in alle Richtungen statt, nicht nur in Richtung des Gartopfes sondern auch in Richtung des Topfsockels, was neben dem bereits erwähnten Verringerung der Heizeffizienz auch zu Schädigungen und Verschleiß der Elemente im Topfsockel führen kann.

### Der Erfindung zugrundeliegende Aufgabe

Aufgabe der Erfindung war es, Töpfe mit integrierten Heizelementen zum Betrieb in Küchenmaschinen zu verbessern.

### Erfindungsgemäße Lösung

Die Bezugszeichen in sämtlichen Ansprüchen haben keine einschränkende Wirkung, sondern sollen lediglich deren Lesbarkeit verbessern.

Die erfindungsgemäße Aufgabe wird durch die Bereitstellung einer Topfbodenheizungsanordnung für eine Küchenmaschine aufweisend einen Topf mit einem Topfboden, in dem ein Heizelement integriert ist, einem Topfmantel und einem Topfsockel gelöst, wobei der Topfboden und der Topfsockel voneinander beabstandet angeordnet sind, und wobei der Topfmantel zwischen dem Topf und dem Topfsockel angeordnet und am Topfboden oder oberhalb des Topfbodens mit der Topfaußenwand und dem Topfsockel verbunden ist, so dass eine luftdichte Kammer zwischen dem Topfboden und dem Topfsockel entsteht.

Dies führt dazu, dass die Wärmeleitung in Richtung des Topfes und des darin befindlichen Gargutes erhöht und die Wärmeleitung in Richtung des Topfsockels verringert wird.

Ist der Topfmantel mit der Topfaußenwand oberhalb des Topfbodens verbunden, so ist der Topfboden zudem in der luftdichten Kammer eingeschlossen, was Wärmeverluste zur Umgebung minimiert und damit die Effizienz des Heizsystems noch weiter erhöht.

Das Heizsystem im Sinne der Erfindung kann durch unterschiedliche Heizelemente realisiert werden, bevorzugt besteht es aus mindestens einer Heizwendel.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

In einer bevorzugten Ausführungsform besteht der Topfboden der Topfbodenheizungsanordnung aus einer Platte aus Edelstahl und einer darunter liegenden Platte aus Aluminium, sowie aus mindestens einer Widerstandsheizungswendel, wobei die mindestens eine Widerstandsheizungswendel unterhalb der Edelstahlplatte in einer Platte aus Aluminium angeordnet ist, welche die mindestens eine Widerstandsheizungswendel formschlüssig zumindest teilweise umschließt und formschlüssig mit der Edelstahlplatte verbunden ist.

Vorzugsweise ist der Topfmantel stoffschlüssig mit dem Topfboden oder mit der Topfaußenwand und formschlüssig mit dem Topfsockel verbunden.

Gemäß der Erfindung kann der Topfmantel mit der Topfaußenwand oder mit dem Topfboden durch mindestens eine Schweißnaht verbunden sein. Bevorzugt wird an drei Stellen angesetzt und mindestens eine Ringnaht (Zwischen Topf und Topfmantel) wird ausgeführt. Sollte der Topfmantel mit dem Topfboden verbunden sein, ist dies bevorzugt an der oberen Platte des Topfbodens, der Edelstahlplatte ausgeführt.

Vorzugsweise besteht der Topfmantel aus Metall, besonders bevorzugt aus Stahl, was neben den bekannten technischen Vorteilen auch zu einem ansprechenden Design führt.

Erfindungsgemäß kann der Topfmantel mit dem Topfsockel durch Verschraubung unter Verwendung von mindestens einer Dichtung verbunden sein. Optimalerweise wird mindestens eine Ringdichtung verwendet, die das Eindringen von Flüssigkeit zwischen Topfmantel und Topfsockel verhindert.

Somit kann die gesamte Topfbodenheizungsanordnung aus der Küchenmaschine entnommen und in Spülwasser gereinigt werden. Zudem befinden sich in der erfindungsgemäßen Anordnung keine Ecken oder Ritzen, die eine Reinigung erschweren oder an einigen Stellen unmöglich machen.

In einer bevorzugten Ausführungsform der Erfindung sind elektrische und/oder mechanische Bauteile im oder teilweise im Topfsockel und/oder Topfmantel angeordnet.

Dies können Anschlussaggregate, Temperaturgeber oder weitere Elektronik sein, sowie auch Teile der Antriebseinheit.

Diese Bauteile sind durch den erfindungsgemäßen Aufbau der Topfbodenheizungsanordnung nun weiter entfernt von den Heizelementen angeordnet, weshalb sie einem geringeren Wärmeeinfluss ausgesetzt sind.

Die führt zu einer verbesserten Leistungsfähigkeit, geringerem Verschleiß und dadurch zu einer verlängerten Lebensdauer der gesamten Anordnung.

In einer Ausführungsvariante kann die Kammer einen Zwischenboden enthalten. Dieser kann durch eine Ringscheibe gebildet sein.

Bevorzugt sind die elektronischen und/oder mechanischen Bauteile mit dem Topfsockel verbunden. Sie können aber auch mit dem Zwischenboden verbunden sein beziehungsweise kann dieser Durchbrüche für Kontakte enthalten. Vorzugsweise werden zur Verbindung Schrauben und Dichtungen verwendet.

Vorteilhaft an dieser Ausgestaltung ist, dass die Bauteile über Lösen der Verschraubungen von außen leicht zugänglich sind und so Fehler einfacher gefunden und behoben werden können.

In weiterer Ausgestaltung der erfindungsgemäßen Topfbodenheizungsanordnung kann vorgesehen sein, dass der Topfsockel, der Topfmantel, der Topfboden und gegebenenfalls der Zwischenboden Öffnungen enthalten, durch die die elektrischen und/oder mechanischen Bauteile fixiert und/ oder miteinander verbunden werden können.

In einer besonderen Ausführungsform können elektrische Bauteile in einem Zwischenraum zwischen dem Topfsockel und dem Zwischenboden angeordnet und am Topfsockel verschraubt sein.

In einer besonderen Ausführungsform enthält der Zwischenboden Ausbuchtungen, so dass die elektrischen Bauteile passgenau zwischen Zwischenboden und Topfsockel angeordnet werden können.

Sie können dort zusätzlich fixiert sowie zusätzlich zur Kammer abgeschirmt werden.

Dies bedeutet noch einen größeren Schutz für die Bauteile.

Vorzugsweise ist der Topfsockel aus Kunststoff aufgebaut. Durch den größeren Abstand zu den Heizelementen, wird der Kunststoff weniger stark durch die Wärme in Mitleidenschaft gezogen, so dass eine größere Auswahl an Kunststoffmaterialien für die Konstruktion des Topfsockels besteht.

Zusätzlich dazu ist es gleichzeitig möglich, die Heizleistung der Heizelemente zu erhöhen um ein noch effektiveres System zu schaffen.

### Kurzbeschreibung der Zeichnungen

Die Erfindung wird anhand der folgenden Figuren, auf welche die Erfindung jedoch nicht beschränkt ist, näher erläutert.

Es zeigt:
- Fig. 1: die Topfbodenheizungsanordnung in Seitenansicht
- Fig. 2: Figur 1 als Explosionszeichnung

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

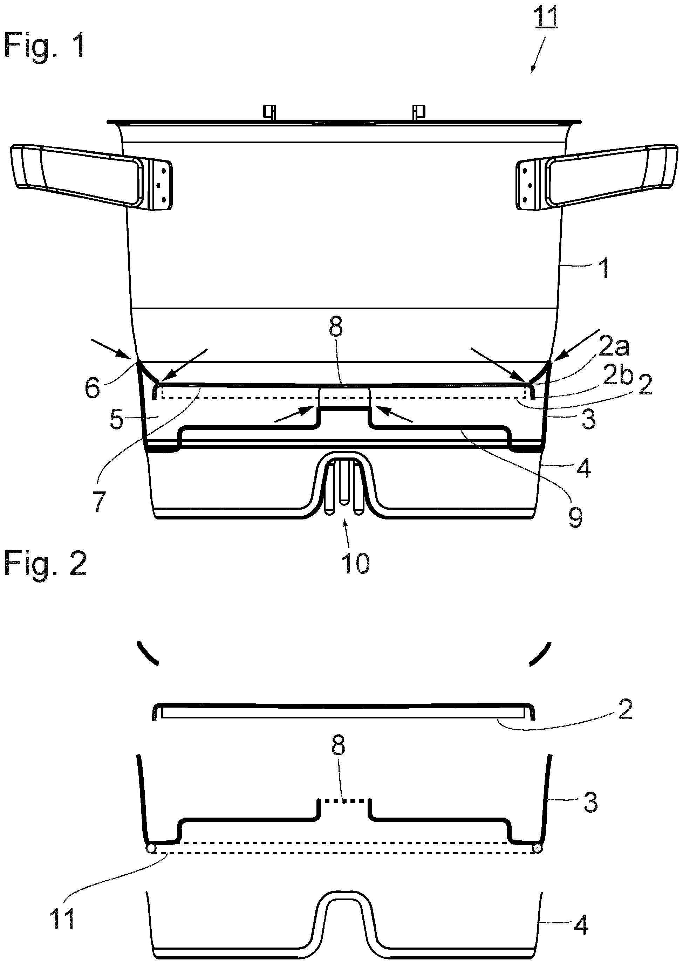

In **Figur 1** ist eine Topfbodenheizungsanordnung 11 in Seitenansicht dargestellt. Diese umfasst einen Topf 1 mit einer Außenwand 6 einem Topfboden 2, der aus zwei Platten 2a Edelstahl und 2b Aluminium besteht, zwischen denen ein Heizelement angeordnet ist (nicht gezeigt). Darunter befindet sich der Topfmantel 3, vorzugsweise aus Edelstahl, der den noch darunterliegenden Topfsockel 4 mit der Außenwand des Topfes 1 kurz oberhalb des Topfbodens 2 verbindet.

Dadurch entsteht eine luftdichte Kammer 5, die den Topf 1 und den Topfsockel 4 voneinander trennt. Der Topfmantel ist ausgehend von den durch Pfeilen markierten Stellen verschweißt. Es ist ebenfalls erkennbar, wie der Topfboden 2 in die Kammer 5 eingebettet ist und von dieser nach unten und zu den Seiten isoliert ist. Oberhalb der Anschlüsse 10 sind Öffnungen 8 zwischen den Schichten gezeigt, durch welche die Bauteile miteinander verbunden werden können.

Ein Zwischenboden 9 befindet sich oberhalb es Topfsockels 4. Dieser gibt durch seine gebogene Form Raum, so dass Bauelemente zwischen dem Topfsockel und dem Zwischenboden 9 angeordnet werden können.

Die **Figur 2** zeigt die Seitenansicht der Topfbodenheizungsanordnung 11 aus Figur 1 in einer Explosionszeichnung. Die Öffnung 8 im Topfmantel 3 ist hier als gestrichelte Linie dargestellt. Ebenfalls gestrichelt ist die Dichtung 10, hier eine Ringdichtung, dargestellt, um den Topfsockel 2 und den Topfmantel 3 wasserundurchlässig zu verschließen. Ebenfalls gezeigt, diesmal durch eine durchgezogene dünne Linie, wie der Topfboden 2 in die Kammer 5 eingebettet ist. Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

Die Erfindung erhöht die Wärmeleitung in Richtung des Topfes und des darin befindlichen Gargutes und verringert die Wärmeleitung in Richtung des Topfsockels verringert. Dadurch, dass der Topfboden in der luftdichten Kammer eingeschlossen ist, werden Wärmeverluste zur Umgebung minimiert und damit die Effizienz des Heizsystems noch weiter erhöht.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

### BEZUGSZEICHENLISTE

| | | | |
|---|---|---|---|
| 1 | Topf | 6 | Topfaußenwand |
| 2 | Topfboden | 7 | Schweißnaht |
| 2a | Edelstahlplatte | 8 | Öffnungen |
| 2b | Aluminiumplatte | 9 | Zwischenboden |
| 3 | Topfmantel | 10 | Anschlüsse |
| 4 | Topfsockel | 11 | Topfbodenheizungsanordnung |
| 5 | Kammer | 12 | Dichtung |

## Patentansprüche

1. Topfbodenheizungsanordnung (11) für eine Küchenmaschine aufweisend
- einen Topf (1), mit einem Topfboden (2) in dem ein Heizelement integriert ist
- einem Topfmantel (3) und einem
- Topfsockel (4)
- wobei der Topfboden (2) und der Topfsockel (4) voneinander beabstandet angeordnet sind, und
**dadurch gekennzeichnet, dass**
der Topfmantel (3) zwischen dem Topf (1) und dem Topfsockel (4) angeordnet und mit dem Topfboden (2) oder oberhalb des Topfbodens (2) mit der Topfaußenwand (6) und dem Topfsockel (4) dergestalt verbunden ist, dass eine luftdichte Kammer (5) zwischen dem Topfboden (2) und dem Topfsockel (4) entsteht.

2. Topfbodenheizungsanordnung (11) nach Anspruch 1,
**dadurch gekennzeichnet, dass**
der Topfboden (2) aus einer Platte aus Edelstahl (2a) und einer darunterliegenden Platte aus Aluminium (2b) besteht und mindestens eine Widerstandsheizungswendel enthält, wobei die mindestens eine Widerstandsheizungswendel unterhalb der Edelstahlplatte (2a) in einer Platte aus Aluminium (2b) angeordnet ist, welche die mindestens eine Widerstandsheizungswendel formschlüssig zumindest teilweise umschließt und formschlüssig mit der Edelstahlplatte (2a) verbunden ist.

3. Topfbodenheizungsanordnung (11) nach einem der Ansprüche 1 oder 2,
**dadurch gekennzeichnet, dass**
der Topfmantel (3) mit der Topfaußenwand (6) oder mit dem Topfboden (2) stoffschlüssig und mit dem Topfsockel (4) formschlüssig verbunden ist.

4. Topfbodenheizungsanordnung (11) nach einem der Ansprüche 1 bis 3,
**dadurch gekennzeichnet, dass**
der Topfmantel (3) mit der Topfaußenwand (6) oder mit dem Topfboden (2) durch mindestens eine Schweißnaht (7) verbunden ist.

5. Topfbodenheizungsanordnung (11) nach einem der Ansprüche 1 bis 4,
**dadurch gekennzeichnet, dass**
der Topfmantel (3) mit dem Topfsockel (4) durch Verschraubung unter Verwendung von mindestens einer Dichtung (11) verbunden ist.

6. Topfbodenheizungsanordnung (11) nach einem der Ansprüche 1 bis 5,
**dadurch gekennzeichnet, dass**
elektrische und/oder mechanische Bauteile im oder teilweise im Topfsockel (4) und/oder Topfmantel (3) angeordnet sind.

7. Topfbodenbeheizungsanordnung (11) nach einem der Ansprüche 1 bis 6
**dadurch gekennzeichnet, dass**
die Kammer (5) einen Zwischenboden (9) enthält.

8. Topfbodenheizungsanordnung (11) nach einem der Ansprüche 1 bis 7,
**dadurch gekennzeichnet, dass**
der Topfsockel (2), der Topfmantel (3), der Topfboden (2) und gegebenenfalls der Zwischenboden (9) Öffnungen (10) enthalten, durch die die elektrischen und/oder mechanischen Bauteile fixiert und/ oder miteinander verbunden werden können.

9. Topfbodenheizungsanordnung (11) nach einem der Ansprüche 1 bis 8,
**dadurch gekennzeichnet, dass**
die elektrische Bauteile in einem Zwischenraum zwischen dem Topfsockel und dem Zwischenboden angeordnet und am Topfsockel verschraubt sind.

10. Topfbodenheizungsanordnung (11) nach einem der Ansprüche 1 bis 9,
**dadurch gekennzeichnet, dass**
der Topfsockel (2) aus Kunststoff besteht.
